Europäisches Patentamt

**European Patent Office**

Office européen des brevets

(19)

(11) Veröffentlichungsnummer: **0 181 543**
**A1**

(12) # EUROPÄISCHE PATENTANMELDUNG

(21) Anmeldenummer: **85113569.9**

(22) Anmeldetag: **25.10.85**

(51) Int. Cl.⁴: **A 01 N 61/00**

(30) Priorität: **10.11.84 DE 3441107**

(43) Veröffentlichungstag der Anmeldung:
**21.05.86 Patentblatt 86/21**

(84) Benannte Vertragsstaaten:
**AT CH DE LI**

(71) Anmelder: **BASF Aktiengesellschaft**
**Carl-Bosch-Strasse 38**
**D-6700 Ludwigshafen(DE)**

(72) Erfinder: **Mueller, Hans, Dr.**
**Mohnstrasse 31**
**D-6700 Ludwigshafen(DE)**

(72) Erfinder: **Neumann, Hans J.**
**Am Huettenwingert 7**
**D-6706 Wachenheim(DE)**

(54) **Verwendung von Polymer-Dispersionen als Wildverbissmittel.**

(57) Die Verwendung wässriger Polymer-Dispersionen als
Wildverbissmittel.

EP 0 181 543 A1

## Verwendung von Polymer-Dispersionen als Wildverbißmittel

Unter Wildverbißmitteln versteht man Mittel zum Schutz junger Forstkulturen vor Schäden durch Wildfraß, wie sie besonders während der Wintermonate regelmäßig verursacht werden. Derartige Schäden können an Nadel-, Laub- und Mischkulturen beträchtliche Ausmaße annehmen, insbesondere wenn, z.B. in Gebirgsregionen, keine Schutzzäune angebracht werden können. In diesen Fällen gelingt es praktisch kaum noch, Mischwald nachzuziehen, da aufkeimender Laubbaumbewuchs vollständig abgeäst wird. Die allein durch Rotwild verursachten Schäden belaufen sich jährlich auf 30 bis 50 Mio DM.

Zur Verhinderung dieses Wildverbisses hat man daher schon junge Forstkulturen mit Wildverbißmitteln auf Basis von Teer, Petroleum, Kresol, Zinkdimethylthiocarbamat-cyclohexylamin, Nikotinsulfat, Terpentin, Carbolineum, Gemischen aus Rinderblut, Steinkohlenteer und Soda, verschiedenen Tierölen wie Dippels Öl, Hirschhornöl und Knochenteer, sowie Tetramethylthiuramdisulfid (TMTD) besprüht. Diese Wildverbißmittel sind jedoch zum Teil für Mensch, Tier und Pflanze giftig und vielfach werden bei nicht genauer Dosierung junge Pflanzentriebe verbrannt. So verursachen praktisch alle Mittel, die Teer oder in Teer enthaltenen Stoffe in isolierter Form enthalten, eine Wachstumsstörung der damit besprühten Pflanzen. TMTD andererseits reizt Haut und Schleimhäute der mit dem Aufsprühen betrauten Personen und kann als Staub über Atemwege und Haut resorbiert werden.

Schließlich ist es, wenn die Mittel nicht versprüht werden können, sehr umständlich, diese auf die Pflanzen aufzubringen und der Gestank, der diesen bekannten Mitteln im allgemeinen eigen ist, belästigt stark. Auch können Störungen und Schäden an der übrigen Flora auftreten, wenn die bekannten Verbißmittel unsachgemäß angewandt werden. Ein besonderer Nachteil all dieser bekannten Wildverbißmittel ist es zudem, daß sie jedes Jahr erneut ausgebracht werden müssen.

Es wurde nun gefunden, daß man wäßrige Polymer-Dispersionen einer mittleren Filmbildetemperatur von 0 bis 35°C mit Vorteil als Wildverbißmittel verwenden kann. Die genannten Dispersionen können leicht durch Versprühen auf junge Forstkulturen, deren Bäume Höhen bis zu ca. 3 m aufweisen, aufgebracht werden, wobei dies auch in verhältnismäßig unwegsamem Gelände, bei dem ein Einzäunen nicht mehr in Frage kommt, z.B. in Hochgebirgsregionen, leicht möglich ist. Von besonderem Vorteil ist es dabei, daß die Polymer-Dispersionen während ihres Aufbringens im allgemeinen kaum oder praktisch nicht riechen und die auf den Jungpflanzen gebildeten Beläge nach dem Trocknen geruchlos und, falls die Dispersionen nicht ein-Wd/P gefärbt waren, auch farblos sind. Schließlich sind die Dispersionen für Mensch und Tier sowie die Pflanzen ungiftig und führen nicht zu Wachstumsstörungen, wobei es ein besonderer Vorteil ist, daß die aus den Polymer-Dispersionen gebildeten Beläge überraschenderweise im Gegensatz zu allen bisher bekannten Mitteln, mehrere Jahre wirksam sind, wenngleich die Polymeren meist nach etwa 3 bis 4 Jahren biologisch abgebaut werden.

Für die neue Verwendung sind praktisch alle wäßrigen Polymer-Dispersionen geeignet, deren Mindestfilmbildetemperatur (MFT) 0 bis 35°C, vorzugsweise 0 bis 20°C beträgt. Bei wäßrigen Dispersionen von Polymeren, die aufgrund ihrer Zusammensetzung eine MFT über 20 bzw. 35°C haben, kann die MFT für die erfindungsgemäße Verwendung auch durch übliche weichmachende Zusätze, z.B. durch geringe Zusätze an Lösungsmittel oder Weichmachern, wie Dibutylphthalat, herabgesetzt werden. Die wäßrigen Polymer-Dispersionen enthalten im allgemeinen von ihrer Herstellung her noch geringe Monomerenreste, die bei der erfindungsgemäßen Verwendung meist von Vorteil sind. Die geeigneten wäßrigen Polymer-Dispersionen, die im Handel im allgemeinen mit Feststoffgehalten von 40 bis 70 Gew.% angeboten werden, können bei ihrem praktischen Einsatz auf Feststoffgehalte bis 5 Gew.% verdünnt und insbesondere mit Feststoffgehalten von 20 bis 60 Gew.% Polymerisat eingesetzt werden. Die Polymerisate können sich z.B. aus monoolefinisch ungesättigten aliphatischen Carbonsäureestern mit 4 bis 12 C-Atomen, wie Acryl- und/oder Methacrylsäureestern 1 bis 8 C-Atome enthaltender geradkettiger oder verzweigter Alkanole wie Methylacrylat und -methacrylat, Ethylacrylat, n-Butylacrylat und -methacrylat, Isobutylacrylat und -methacrylat, n-Hexylacrylat und 2-Ethylhexylacrylat und -methacrylat sowie Vinylestern 2 bis 8 C-Atome enthaltender Carbonsäuren, wie Vinylacetat, Vinylpropionat und Vinyllaurat ableiten und gegebenenfalls bis zu 60 % ihres Gewichtes an vinylaromatischen Verbindungen, wie besonders Styrol und/oder Acrylnitril und/oder Vinylhalogenide, wie Vinylchlorid und/oder Vinylidenchlorid sowie Monoolefine wie besonders Ethylen einpolymerisiert enthalten. So sind z.B. wäßrige Dispersionen von Polymerisaten aus 20 bis 60 % Acrylsäureestern, wie besonders n-Butylacrylat oder Isobutylacrylat und 40 bisw 60 % Styrol und/oder Acrylnitril, die geringe Mengen reaktive Gruppen aufweisender Monomerer wie besonders 3 bis 5 C-Atome enthaltender monoolefinisch ungesättigter Mono- und/oder Dicarbonsäuren oder deren Amide einpolymerisiert enthalten sowie wäßrige Dispersionen von Copolymerisaten des Vinylacetats mit z.B. Vinylchlorid und/oder Ethylen gut geeignet. Schließlich kommen auch wäßrige Dispersionen von Polymeren aus 40 bis 60 % Butadien und 60 bis 40 % Styrol in Frage, die noch geringe Anteile an 3 bis 5 C-Atome enthaltenden monoolefinisch ungesättigten Mono- und/oder Dicarbonsäuren und/oder deren Amiden einpolymerisiert enthalten. Geeignet sind ferner wäßrige Polyvinylacetatdispersionen deren MFT durch Zusatz üblicher Weichmacher in

0181543

den Bereich von 0 bis 35°C gebracht wurde. Von besonderem Interesse sind wäßrige Dispersionen, deren Polymerisate Styrol einpolymerisiert enthalten, insbesondere wenn sie einen verhältnismäßig hohen Anteil an restlichem monomerem Styrol aufweisen, der im allgemeinen zwischen 0,1 und 1,0 Gew.% Styrol, bezogen auf das Polymerisat, betragen kann.

Zusätzlich können die wäßrigen Polymer-Dispersionen bei ihrer Verwendung als Wildverbißmittel Zusätze an Pigmenten und/oder Schädlingsbekämpfungsmitteln und/oder an anderen zusätzlichen, gegebenenfalls bekannten Wildverbißmitteln enthalten.

### Beispiel

Eine der Allgemeinheit nicht zugängliche private, im Hochgebirge gelegene, mit ein- bis zehnjährigen Laub- und Nadelbäumen bepflanzte, etwa 5 ha große Versuchsfläche mit überdurchschnittlichem Rotwildbestand wurde im August 1982 mit einer 55 %igen wäßrigen Dispersion eines Copolymerisates aus 47 Gew.% Butylacrylat, 49 Gew.% Styrol und jeweils 2 Gew.% Acrylsäure und Methacrylamid, die einen Zusatz von 10 Gew.% eines Verfilmungshilfsmittels, bezogen auf das Polymerisat, und 10 % Titandioxid (Weißpigment) enthielt, in einer Menge von 5 bis 50 g/m² derart besprüht, daß jeweils etwa jede zehnte Pflanze zum Vergleich unbehandelt blieb. Nach zweijähriger Beobachtung zeigten die mit der Polymer-Dispersion behandelten Pflanzen keinen Wildverbiß. Demgegenüber zeigten die unbesprühten Jungbäume die üblichen Schäden durch Wildverbiß, wobei die nichtbesprühten Laubbaumpflanzen infolge totalen Wildverbisses eingegangen waren.

<u>Patentanspruch</u>

Verwendung wäßriger Polymer-Dispersionen einer mittleren Filmbildetemperatur von 0 bis 35°C als Wildverbißmittel.

Europäisches
Patentamt

**EUROPÄISCHER RECHERCHENBERICHT**

0181543
Nummer der Anmeldung

EP 85 11 3569

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | CHEMICAL ABSTRACTS, Band 97, Nr. 13, 27. September 1982, Seite 204, Nr. 105620h, Columbus, Ohio, US; & RO - A - 73313 (INSTITUTUL DE CERCETARI SI AMENJARI SILVICE) 02-03-1981 * Insgesamt * | 1 | A 01 N 61/00 |
| A | US-A-4 169 902 (C.F. DE LONG) * Spalte 2, Zeile 59 - Spalte 3, Zeile 53; Spalte 4, Zeilen 5-65; Spalte 5, Zeile 45 - Spalte 6, Zeile 43; Ansprüche * | 1 | |
| A | DE-C- 696 393 (A. VON SACHS) * Seite 1, Zeile 51 - Seite 2, Zeile 51; Anspruch * | 1 | |
| A | CHEMICAL ABSTRACTS, Band 76, Nr. 15, 10. April 1972, Seite 123, Nr. 82207d, Columbus, Ohio, US; & CS - A - 139 041 (V. BERNASEK et al.) 15-11-1970 * Insgesamt * | 1 | RECHERCHIERTE SACHGEBIETE (Int Cl 4) A 01 N |

Der vorliegende Recherchenbericht wurde für alle Patentansprüche erstellt

| Recherchenort | Abschlußdatum der Recherche | Prüfer |
|---|---|---|
| DEN HAAG | 24-02-1986 | FLETCHER A.S. |